(19) Europäisches Patentamt
European Patent Office
Office européen des brevets

(11) Veröffentlichungsnummer: **0 401 684 B1**

(12) **EUROPÄISCHE PATENTSCHRIFT**

(45) Veröffentlichungstag der Patentschrift: **26.07.95**

(51) Int. Cl.[6]: **C07F 7/08**, C07F 7/12

(21) Anmeldenummer: **90110351.5**

(22) Anmeldetag: **31.05.90**

Die Akte enthält technische Angaben, die nach dem Eingang der Anmeldung eingereicht wurden und die nicht in dieser Patentschrift enthalten sind.

# (54) Verfahren zur Herstellung von Organosiloxanen.

(30) Priorität: **05.06.89 DE 3918337**

(43) Veröffentlichungstag der Anmeldung:
**12.12.90 Patentblatt 90/50**

(45) Bekanntmachung des Hinweises auf die Patenterteilung:
**26.07.95 Patentblatt 95/30**

(84) Benannte Vertragsstaaten:
**AT BE CH DE ES FR GB IT LI NL**

(56) Entgegenhaltungen:
**EP-A- 0 203 565**
**DE-A- 1 964 553**
**US-A- 3 101 361**
**US-A- 3 549 680**
**US-A- 4 096 161**

**CHEMICAL ABSTRACTS, Band 85, 1976, Seite 710, Zusamenfassung Nr. 21528y,Columbus, Ohio, US; M.G. VORONKOV et al.: "Cleavage of the silicon-oxygen-silicon group by tetrachlorosilane and organylchlorosilanes",& DOKL. AKAD. NAUK SSSR 1976, 227(2), 362-5**

(73) Patentinhaber: **WACKER-CHEMIE GMBH**
**Hanns-Seidel-Platz 4**
**D-81737 München (DE)**

(72) Erfinder: **Staiger, Gerhard, Dr. Dipl.-Chem.**
**Sudetenstrasse 16**
**D-8262 Altötting (DE)**
Erfinder: **Müller, Johann**
**Friedrich-Ebert-Strasse 13**
**D-8263 Burghausen (DE)**
Erfinder: **Doskocil, Walter**
**Wacker-Strasse 56**
**D-8263 Burghausen (DE)**

EP 0 401 684 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung betrifft ein Verfahren zur Herstellung von Organosiloxanen (1) der allgemeinen Formel

$R^1_{4-n}Si(OSiR_3)_n$ ,

wobei R gleich oder verschieden ist, ein Wasserstoffatom oder einen einwertigen, gegebenenfalls substituierten Kohlenwasserstoffrest mit 1 bis 18 Kohlenstoffatom(en) je Rest bedeutet,
$R^1$ R oder ein Chloratom bedeutet und
n 3 oder 4 ist,
durch Umsetzung von Organodisiloxanen (2) der allgemeinen Formel

$(R_3Si)_2O$ ,

mit Chlorsilanen (3) der allgemeinen Formel

$R_{4-n}SiCl_n$ ,

wobei R und n die oben dafür angegebene Bedeutung haben, in Gegenwart von Phosphornitridchloriden (4) als Katalysatoren.

Gemäß GB-A 1 195 761 (veröffentlicht 24. Juni 1970, Wacker-Chemie GmbH) ist es bekannt, Organohalogensiliciumverbindungen durch Umsetzung von Halogensiliciumverbindungen mit Organosiloxanen, die kein Si-gebundenes Halogen enthalten, in Gegenwart von Phosphornitridchloriden herzustellen. In EP-B 115 772 (ausgegeben 15. Februar 1989, H.-J. Kötzsch et al., Hüls Troisdorf AG) ist die Spaltung von Organodisiloxanen mit Chlorsilanen in Gegenwart von $FeCl_3$ und Chlorwasserstoff als Katalysator beschrieben.

Es bestand die Aufgabe, ein Verfahren zur Herstellung von Organosiloxanen durch Umsetzung von Organodisiloxanen mit Chlorsilanen in Gegenwart von Phosphornitridchloriden bereitzustellen, bei dem die Organosiloxane selektiv und in höheren Ausbeuten als bisher erhalten werden. Weiterhin bestand die Aufgabe ein Katalysatorsystem für die Umsetzung bereitzustellen, das eine Abspaltung von organischen Resten von den Siliciumatomen nicht fördert und bei dem auch Organosiliciumverbindungen eingesetzt werden können, die Si-gebundenen Wasserstoff oder Si-gebundene, organofunktionelle Gruppen aufweisen. Diese Aufgabe wird durch die Erfindung gelöst.

Gegenstand der Erfindung ist ein Verfahren zur Herstellung von Organosiloxanen (1) der allgemeinen Formel

$R^1_{4-n}Si(OSiR_3)_n$ ,

wobei R gleich oder verschieden ist, ein Wasserstoffatom oder einen einwertigen, gegebenenfalls substituierten Kohlenwasserstoffrest mit 1 bis 18 Kohlenstoffatom(en) je Rest bedeutet,
$R^1$ R oder ein Chloratom bedeutet und
n 3 oder 4 ist,
durch Umsetzung von Organodisiloxanen (2) der allgemeinen Formel

$(R_3Si)_2O$ ,

mit Chlorsilanen (3) der allgemeinen Formel

$R_{4-n}SiCl_n$ ,

wobei R und n die oben dafür angegebene Bedeutung haben, in Gegenwart von Phosphornitridchloriden (4) als Katalysatoren, dadurch gekennzeichnet, daß Cokatalysatoren (5) zu Phosphornitridchloriden mitverwendet werden, wobei als Cokatalysatoren solche ausgewählt aus der Gruppe der Amide der allgemeinen Formel

$X-C(O)-R^2$ ,

wobei $R^2$ gleich oder verschieden ist, ein Wasserstoffatom oder einen einwertigen, gegebenenfalls substituierten Kohlenwasserstoffrest mit 1 bis 8 Kohlenstoffatom(en) je Rest und
X einen Rest der Formel $R^2_2N-$ oder

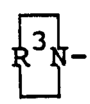

bedeutet,
wobei $R^2$ die oben dafür angegebene Bedeutung hat, und
$R^3$ einen zweiwertigen Kohlenwasserstoffrest mit 5 bis 7 Kohlenstoffatomen je Rest bedeutet,
Harnstoff bzw. Harnstoffderivate der allgemeinen Formel

$X-C(O)-X$ ,

wobei X die oben dafür angegebene Bedeutung hat,
und Cyanursäure mitverwendet werden.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl- und tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Reste R sind Cyanalkylreste, wie der β-Cyanethylrest; halogenierte Kohlenwasserstoffreste, beispielsweise Halogenalkylreste, wie der 3,3,3-Trifluor-n-propylrest, der 2,2,2,2′,2′,2′-Hexafluorisopropylrest, der Heptafluorisopropylrest, und Halogenarylreste, wie der o-, m-, und p-Chlorphenylrest; Acyloxyalkylreste, wie der 3-Acetoxypropyl-, 3-Acryloxypropyl- und 3-Methacryloxypropylrest; Alkoxyalkylreste, wie der 3-Methoxypropyl-, 3-(2-Methoxyethoxy)-propyl- und 3-Glycidoxypropylrest; und Mercaptoalkylreste, wie der 3-Mercaptopropyl- und 3-Methylthiopropylrest.

Beispiele für Reste $R^2$ sind Alkylreste, wie der Methyl-, Ethyl-, n-Propyl-, iso-Propyl-, 1-n-Butyl, 2-n-Butyl-, iso-Butyl-, tert.-Butyl-, n-Pentyl-, iso-Pentyl-, neo-Pentyl- und tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste $R^2$ sind halogenierte Kohlenwasserstoffreste, wie der 2-Chlorethyl- und 3-Chlorpropylrest; Hydroxyalkylreste, wie der 2-Hydroxyethyl- und der 3-Hydroxypropylrest; Alkoxyalkylreste, wie der 2-Methoxyethylrest; und Aminoalkylreste, wie der 2-(Dimethylamino)-ethylrest.

Ein Beispiel für den Rest $R^3$ ist der Cyclohexylenrest.

Ein besonders bevorzugtes Beispiel für ein Organodisiloxan (2) ist das als Abfall bei der Antibiotica-Synthese anfallende Hexamethyldisiloxan. Weitere bevorzugte Bespiele für Organodisiloxane sind 1,3-Divinyl-1,1,3,3-tetramethyldisiloxan und 1,1,3,3-Tetramethyldisiloxan. Es können auch verunreinigte Organodisiloxane eingesetzt werden, z.B. Losungsmittel wie Toluol oder Chloroform enthaltende Organodisiloxane. Aminhaltige Organodisiloxane sind vor der Verwendung zu neutralisieren.

Ein besonders bevorzugtes Beispiel für ein Chlorsilan der Formel (3) ist Tetrachlorsilan. Ein Beispiel für ein Chlorsilan mit einem Si-gebundenen, organofunktionellen Rest ist 3-Methacryloxypropyltrichlorsilan.

Die Umsetzung erfolgt nach folgenden Reaktionsschemen:

(I) $3\ (R_3SiO)_2O + SiCl_4 \dashrightarrow ClSi(OSiR_3)_3 + 3\ R_3SiCl$

(II) $3\ (R_3SiO)_2O + RSiCl_3 \dashrightarrow RSi(OSiR_3)_3 + 3\ R_3SiCl$

(III) $4\ (R_3SiO)_2O + SiCl_4 \dashrightarrow Si(OSiR_3)_4 + 4\ R_3SiCl$

Gleichzeitig mit der Herstellung der Organosiloxane (1) wird, wie die Reaktionsgleichungen (I), (II) und (III) zeigen, Triorganochlorsilan hergestellt.

Bei dem erfindungsgemäßen Verfahren werden bei der Umsetzung vorzugsweise mindestens 1 Mol Organodisiloxan (2) je Grammatom Si-gebundenen Chlors im Chlorsilan (3) eingesetzt.

Beispiele für die nach dem erfindungsgemäßen Verfahren hergestellten Organosiloxane (1) sind 3-Chloro-3-trimethylsiloxyhexamethyltrisiloxan, 1,1,5,5-Tetramethyl-3-chloro-3-dimethylsiloxytrisiloxan, 1,5-Divinyl-1,1,5,5-tetramethyl-3-chloro-3-vinyldimethylsiloxytrisiloxan, 3-Methacryloxypropyl-3-trimethylsiloxyhexamethyltrisiloxan, 3,3-Bis-(trimethylsiloxy)hexamethyltrisiloxan, 1,1,5,5-Tetramethyl-3,3-bis(dimethylsiloxy)trisiloxan und 1,5-Divinyl-1,1,5,5-tetramethyl-3,3-bis-(vinyldimethylsiloxy)trisiloxan.

Bei den Phosphornitridchloriden (4), die die Umsetzung von Organodisiloxanen (2) mit Chlorsilanen (3) katalysieren, kann es sich z. B. um solche handeln, die durch Umsetzung von 400 Gewichtsteilen Phosphorpentachlorid mit 130 Gewichtsteilen Ammoniumchlorid hergestellt wurden (vgl. z.B. "Berichte der Deutschen Chemischen Gesellschaft", 57. Jahrgang 1924, S. 1345) oder um solche handeln, die durch Umsetzung von 2 Mol Phosphorpentachlorid mit 1 Mol Ammoniumchlorid erhältlich sind (vgl. z.B. US-A 3 839 388, ausgegeben 1. Oktober 1974, S. Nitzsche et al., Wacker-Chemie GmbH). Selbstverständlich können auch Gemische aus mindestens zwei verschiedenen Arten von Phosphornitridchloriden verwendet werden.

Phosphornitridchlorid (4) wird vorzugsweise in Mengen von 0,1 bis 50 Gew.-°/oo, insbesondere 0,5 bis 20 Gew.-°/oo, jeweils bezogen auf das Gesamtgewicht der jeweils eingesetzten Menge an Organosiliciumverbindungen (2) und (3), eingesetzt. Zur besseren Verteilung und einfacheren Dosierung werden die Phosphornitridchloride in Form ihrer Lösungen in einem inerten Lösungsmittel eingesetzt. Beispiele für geeignete Lösungsmittel sind Kohlenwasserstoffe, wie Hexan oder Cyclohexan, und Halogenkohlenwasserstoffe, wie Methylenchlorid oder 1,2,3-Trichlorpropan. Vorzugsweise enthalten diese Lösungen 20 bis 60 Gew.-% Phosphornitridchloride, bezogen auf das Gesamtgewicht an Phosphornitridchloriden und Lösungsmittel.

Beispiele für Cokatalysatoren (5) sind solche der Formel

$HC(O)N(CH_3)_2$,
$HC(O)NH_2$,
$H_3CC(O)N(CH_3)_2$,
$H_3CC(O)NH_2$,
$H_2NC(O)NH_2$,
$(H_3C)_2NC(O)N(CH_3)_2$,
(n-Bu)NHC(O)NH(n-Bu),

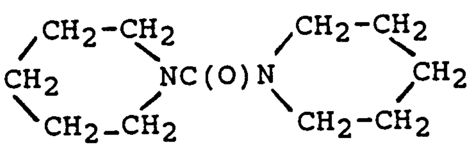 ,

$HO(CH_2)_2NHC(O)NH(CH_2)_2OH$ und
$H_3CNHC(O)NHCH_3$.

Bevorzugte Beispiele für Cokatalysatoren (5) sind Tetramethylharnstoff und N,N'-Bis(2-hydroxyethyl)harnstoff.

Cokatalysatoren (5) werden vorzugsweise in Mengen von 0,1 Gew.-ppm bis 1 Gew.-%, bevorzugt 0,1 bis 1000 Gew.-ppm, jeweils bezogen auf das Gesamtgewicht der jeweils eingesetzten Organosiliciumverbindungen (2) und (3), eingesetzt. Zur besseren Verteilung und einfacheren Dosierung kann auch der Cokatalysator (5) in Form seiner Lösungen in einem inerten Lösungsmittel, wie einem Kohlenwasserstoff z.B. Hexan oder Halogenkohlenwasserstoff z.B. Methylenchlorid, eingesetzt werden.

Das erfindungsgemäße Verfahren wird vorzugsweise bei 0° bis 90°C, bevorzugt 20 bis 55°C durchgeführt. Der bei dem erfindungsgemäßen Verfahren angewandte Druck ist üblicherweise der Druck der umgebenden Atmosphäre.

Das erfindungsgemäße Verfahren wird in einfacher Weise so durchgeführt, daß nach dem Vermischen des Organodisiloxans (2) und des Chlorsilans (3) mit Phosphornitridchlorid (4) und dem Cokatalysator (5) die Reaktion vorzugsweise unter Rühren und Temperaturkontrolle gesteuert wird, bis das Reaktionsgemisch ausreagiert hat. Die Reaktionszeit beträgt vorzugsweise 4 bis 100 Stunden, bevorzugt 20 bis 70 Stunden.

Vorzugsweise wird der Katalysator nach Ablauf der Reaktion unwirksam gemacht. Dies kann z.B. durch destillative Abtrennung der Reaktionsprodukte vom Katalysator unter vermindertem Druck oder durch Adsorption des Katalysators an Molekularsieben oder durch Neutralisation mit Basen, wie Aminen oder Metalloxiden geschehen. Vorzugsweise erfolgt das Unwirksammachen des Katalysators mit tertiären Aminen oder Metalloxiden. Beispiele für tertiäre Amine sind Triethylamin und Tri-n-butylamin. Ein Beispiel für ein Metalloxid ist Magnesiumoxid. Vorzugsweise werden etwa 1 bis 5 Mol Amin oder Metalloxid je Grammatom Phosphor in den Phosphornitridchloriden verwendet. Zur besseren Verteilung und einfacheren Dosierung können beispielsweise die Amine in Form ihrer Lösungen in einem inerten Lösungsmittel verwendet werden. Zweckmäßig enthalten diese Lösungen 20 bis 60 Gew.-% an Amin, bezogen auf das Gesamtgewicht an Amin und Lösungsmittel. Die für das erfindungsgemäße Verfahren bei der Umsetzung der Organodisiloxane (2) mit den Chlorsilanen (3) genannten Temperatur- und Druckbedingungen gelten auch für die Neutralisation der Katalysatoren mit Aminen und Metalloxiden. Die erfindungsgemäß hergestellten Organosiloxane (1) werden vorzugsweise durch fraktionierte Destillation erhalten.

Die erfindungsgemäß hergestellten Organosiloxane (1) können für alle Zwecke verwendet werden, bei denen Organosiloxane dieser Art herkömmlicherweise eingesetzt werden. Hierzu gehort z.B. die Verwendung als solche oder als Zwischenprodukt zur Herstellung von Formkörpern und Überzügen; ferner die Verwendung als Vernetzungsmittel von Siliconharzen und -kautschuken, als Siloxankettenstopper, als Silylierungsmittel von Monomeren sowie als Schutzgruppe.

Das in den folgenden Beispielen verwendete Phosphornitridchlorid wurde folgendermaßen hergestellt:

Ein Gemisch aus 417 g (2 Mol) Phosphorpentachlorid und 53,3 g (1 Mol) Ammoniumchlorid in 1000 ml Tetrachlorethan wird 12 Stunden zum Sieden unter Rückfluß erwärmt. Aus der so erhaltenen hellgelben Lösung werden bei 160°C und unter Erniedrigung des Druckes auf etwa 1,33 hPa (abs.) die flüchtigen Anteile entfernt. Als Rückstand verbleiben gelbliche Kristalle, die im wesentlichen aus der Verbindung der Formel

$Cl_3PNPCl_2NPCl_3 \cdot PCl_6$

bestehen.

Beispiel 1:

In einem 4-Liter Mehrhalskolben mit Innenthermometer, Rührer und Rückflußkühler werden zu einer Mischung aus 1707 g (10,5 Mol) Hexamethyldisiloxan und 595 g (3,5 Mol) Tetrachlorsilan unter Rühren 4,6 g (0,2 Gew-%) Tetramethylharnstoff und 183,4 g einer 25 %igen Lösung von Phosphornitridchlorid in Methylenchlorid gegeben. Durch Kühlung hält man die Reaktionstemperatur bei 45°C. Nach 21 Stunden destilliert man die flüchtigen Bestandteile des Reaktionsgemisches bei 200 mbar und 100 °C ab. Das Rohdestillat enthält 56 % 3-Chlor-3-trimethylsiloxyhexamethyltrisiloxan, 29 % 3,3-Dichlorohexamethyltrisiloxan und 16 % 3,3-Bis-(trimethylsiloxy)hexamethyltrisiloxan. Das Rohdestillat wird fraktioniert destilliert und daraus werden bei 20 mbar und 83 bis 87 °C 313 g (27 % d. Th.) 3-Chlor-3-trimethylsiloxyhexamethyltrisiloxan in einer gaschromatographisch bestimmten Reinheit von 97 % erhalten.

Vergleichsversuch 1:

Ein Gemisch aus 486 g (3,0 Mol) Hexamethyldisiloxan und 170 g (1,0 Mol) Tetrachlorsilan wird unter Rühren bei Raumtemperatur mit 1,9 ml einer 25 %igen Lösung von Phosphornitridchlorid in Methylenchlorid versetzt. Nach 8 Stunden Rühren bei Raumtemperatur wird der Katalysator durch Zugabe von 2,2 ml Tri-n-butylamin unwirksan gemacht. Die Destillation des Reaktionsgemisches liefert bei 18 bis 34 °C und 2 mbar 55 g 3,3-Dichlorohexamethyltrisiloxan, jedoch kein 3-Chlor-3-trimethylsiloxyhexamethyltrisiloxan. Auch im Destillationsrückstand (12 g) und in der Kühlfalle (583 g einer Mischung aus Trimethylchlorsilan und 1,1,1-Trichlor-3,3,3-trimethyldisiloxan) befindet sich das gewünschte 3-Chlor-3-trimethylsiloxyhexamethyltrisiloxan nicht.

Beispiel 2:

Zu einer Mischung aus 1834 g (9,86 Mol) 1,3-Divinyl-1,1,3,3-tetramethyldisiloxan, 2,4 g einer 2,5 %igen Lösung von Tetramethylharnstoff in Methylenchlorid und 559 g (3,29 Mol) Tetrachlorsilan fügt man unter Rühren bei Raumtemperatur 24 g einer 25 %igen Losung von Phosphornitridchlorid in Methylenchlorid. Nach 46 Stunden wird das Reaktionsgemisch mit Magnesiumoxid neutralisiert und das Gemisch wird filtriert. Die flüchtigen Bestandteile des Filtrats werden im Rotationsverdampfer bei 30 °C und ca. 4 mbar abgedampft und anschließend fraktioniert destilliert. Bei 93 bis 100 °C und 6 mbar werden 334 g (30 % d. Th.) 1,5-Divinyl-1,1,5,5-tetramethyl-3-chloro-3-vinyldimethylsiloxytrisiloxan in einer gaschromatographisch bestimmten Reinheit von 94 % erhalten.

Vergleichsversuch 2:

Ein Gemisch aus 278 g (1,5 Mol) 1,3-Divinyl-1,1,3,3-tetramethyldisiloxan und 85 g (0,5 Mol) Tetrachlorsilan wird mit 1 ml einer 25 %igen Lösung von Phosphornitridchlorid in Methylenchlorid versetzt. Nach 116 Stunden Rühren bei Raumtemperatur werden 1,1 ml Tri-n-butylamin hinzugefügt, dann wird 30 Minuten weitergerührt und anschließend wird das Reaktionsgemisch fraktioniert destilliert. Bei 45 bis 52 °C und 3 mbar werden 85 g 1,5-Divinyl-1,1,5,5-tetramethyl-3,3-dichlorotrisiloxan, jedoch kein 1,5-Divinyl-1,1,5,5-tetramethyl-3-chloro-3-vinyldimethylsiloxytrisiloxan erhalten.

Beispiel 3:

Eine Mischung aus 972 g (6,0 Mol) Hexamethyldisiloxan, 261 g (1,0 Mol) 3-Methacryloxypropyltrichlorsilan, 9,86 g einer 25 %igen Lösung von Phospornitridchlorid in Methylenchlorid, 0,24 g Tetramethylharnstoff und 0,3 g 2,6-Di-tert.-butyl-4-methylphenol wird bei Raumtemperatur 70 Stunden lang gerührt. Dann wird Trichlorsilan und überschüssiges Hexamethyldisiloxan abgedampft, der Rückstand mit Wasser neutral gewaschen, mit Natriumsulfat getrocknet, abfiltriert und das Filtrat über eine Destillationskolonne fraktioniert destilliert. Als Hauptfraktion wird bei 110 bis 115 °C und 5 mbar 215 g (51 % d. Th.) 3-Methacryloxypropyl-3-trimethylsiloxyhexamethyltrisiloxan in einer gaschromatographisch bestimmten Reinheit von 99,7 % erhalten.

Vergleichsversuch 3:

Eine Mischung aus 243 g (1,5 Mol) Hexamethyldisiloxan, 65,4 g (0,25 Mol) 3-Methacryloxypropyltrichlorsilan, 900 ppm Phospornitridchlorid und 500 ppm 2,6-Di-tert.-butyl-4-methylphenol wird bei Raumtemperatur 116 Stunden lang gerührt. Durch Zugabe von 0,96 ml Tri-n-butylamin wird das Phosphornitridchlorid unwirksam gemacht und die Reaktionsmischung wird anschließend fraktioniert destilliert. Es werden bei 107 bis 113 °C und 3 mbar 25 g (23 % d. Th.) 3-Methacryloxypropyl-3-trimethylsiloxyhexamethyltrisiloxan erhalten.

Beispiel 4:

Zu einer Mischung aus 243 g (1,5 Mol) Hexamethyldisiloxan, 42,5 g (0,25 Mol) Tetrachlorsilan und 0,35 g N,N′-Bis(2-hydroxyethyl)harnstoff werden bei Raumtemperatur unter Rühren 22,8 ml einer 25 %igen Lösung von Phosphornitridchlorid in 1,2,3-Trichlorpropan zugegeben. Nach 21 Stunden wird überschüssiges Hexamethyldisiloxan sowie Trimethylchlorsilan bei 30 °C und 20 mbar abdestilliert. Der Rückstand wird mit 50 ml Wasser versetzt, die Wasserphase anschließend wieder abgetrennt, die organische Phase mit Natriumsulfat getrocknet und anschließend fraktioniert destilliert. Es werden bei 35 bis 47 °C und 3 mbar 75 g (78 % d. Th.) 3,3-Bis(trimethylsiloxy)hexamethyltrisiloxan erhalten.

Beispiel 5:

Zu einer Mischung aus 558 g (3,0 Mol) 1,3-Divinyl-1,1,3,3-tetramethyldisiloxan,0,32 g Tetramethylharnstoff und 12,9 g einer 25 %igen Lösung von Phosphornitridchlorid in Methylenchlorid werden innerhalb von 6 Stunden bei 25 °C eine Mischung aus 85 g (0,5 Mol) Tetrachlorsilan und 186 g (1,0 Mol) 1,3-Divinyl-1,1,3,3-tetramethyldisiloxan zugetropft. Nach weiteren 20 Stunden Reaktionszeit werden die flüchtigen Bestandteile der Reaktionsmischung bei 30 °C und 20 mbar abdestilliert. Der Rückstand wird über 50 g Kieselgel abfiltriert, das Filtrat wird dann fraktioniert destilliert. Es werden bei 85 bis 105 °C und 2 mbar 85 g (44 % d. Th.) 1,5-Divinyl-1,1,5,5-tetramethyl-3,3-bis-(vinyldimethylsiloxy)trisiloxan erhalten.

Vergleichsversuch 5:

Eine Mischung aus 595 g (3,2 Mol) 1,3-Divinyl-1,1,3,3-tetramethyldisiloxan, 136 g (0,8 Mol) Tetrachlorsilan und 2 ml einer 25 %igen Lösung von Phosphornitridchlorid in Methylenchlorid wird bei Raumtemperatur 8 Stunden lang gerührt. Dann werden 2,3 ml Tri-n-butylamin hinzugefügt, um das Phosphornitridchlorid unwirksam zu machen. Anschließend wird nach 30 Minuten Rühren das Reaktionsgemisch fraktioniert destilliert. Es werden bei 20 bis 22 °C und 2 mbar 216 g 1,1,1-Trichloro-3-vinyl-3,3-dimethyldisiloxan, bei 23 bis 42 °C und 2 mbar 53 g 1,5-Divinyl-1,1,5,5-tetramethyl-3,3-dichlorotrisiloxanund bei 42 bis 72 °C und 2 mbar 9 g einer 1:1 Mischung aus 1,5-Divinyl-1,1,5,5-tetramethyl-3,3-dichlorotrisiloxan und 1,5-Divinyl-1,1,5,5-tetramethyl-3-chloro-3-trimethylsiloxytrisiloxan erhalten. In der Kühlfalle werden 372 g Vinyldimethylchlorsilan aufgefangen. Das gewünschte 1,5-Divinyl-1,1,5,5-tetramethyl-3,3-bis-(vinyldimethylsiloxy)trisiloxan wird nicht erhalten.

Beispiel 6:

Eine Mischung aus 804 g (6,0 Mol) Tetramethyldisiloxan, 1740 g (1,0 Mol) Tetrachlorsilan, 0,2 g Tetramethylharnstoff und 7,8 g einer 25 %igen Lösung von Phosphornitridchlorid in Methylenchlorid wird bei Raumtemperatur 28 Stunden lang gerührt. Dann werden die leicht flüchtigen Bestandteile bei 20 °C und 20 mbar abgedampft, der Rückstand mit Wasser neutral gewaschen, mit Natriumsulfat getrocknet und über eine Vigreux-Kolonne fraktioniert destilliert. Es werden bei 47 bis 60 °C und 2 mbar 135,2 g (41 % d. Th.) 1,1,5,5-Tetramethyl-3,3-Bis(dimethylsiloxy)trisiloxan erhalten.

Vergleichsversuch 6:

Eine Mischung aus 536 g (4,0 Mol) Tetramethyldisiloxan, 170 g (1,0 Mol) Tetrachlorsilan und 2 ml einer 25 %igen Lösung von Phosphornitridchlorid in Methylenchlorid wird bei Raumtemperatur 116 Stunden lang gerührt. Dann werden 1,1 ml Tri-n-butylamin hinzugefügt, um das Phosphornitridchlorid unwirksam zu machen. Anschließend wird nach 30 Minuten Rühren das Reaktionsgemisch fraktioniert destilliert. Es werden bei 30 bis 43 °C und 10 mbar 17 g 1,1,5,5-Tetramethyl-3,3-dichlorotrisiloxan sowie bei 44 bis 47 °C und 10 mbar 98 g 1,1,5,5-Tetramethyl-3-chloro-3-dimethylsiloxytrisiloxan erhalten, aber das gewünschte 1,1,5,5-Tetramethyl-3,3-bis-(dimethylsiloxy)trisiloxan wird nicht erhalten.

Vergleichsversuch 7:

Zu einer Mischung aus 268 g (2,0 Mol) Tetramethyldisiloxan und 85 g (0,5 Mol) Tetrachlorsilan werden unter Rühren 0,04 g $FeCl_3$ zugegeben und anschließend wird 2 Minuten lang HCl eingeleitet. Die Temperatur der Mischung steigt dabei auf 40 °C. Es wird noch 4 Stunden lang weiter geruhrt und dann wird das Reaktionsgemisch über eine Vigreux-Kolonne fraktioniert destilliert. Es werden bei 20 bis 46 °C und 1 mbar 41 g eines Gemisches aus 1,1,5,5-Tetramethyl-3,3-dichlorotrisiloxan und Tetramethyldisiloxan sowie bei 46 bis 48 °C und 1 mbar 13,5 g 1,1,5,5-Tetramethyl-3-chloro-3-dimethylsiloxytrisiloxan erhalten. Das gewünschte 1,1,5,5-Tetramethyl-3,3-bis(dimethylsiloxy)trisiloxan wird nicht erhalten.

## Patentansprüche

**1.** Verfahren zur Herstellung von Organosiloxanen (1) der allgemeinen Formel

$R^1_{4-n}Si(OSiR_3)_n$ ,

wobei R gleich oder verschieden ist, ein Wasserstoffatom oder einen einwertigen, gegebenenfalls substituierten Kohlenwasserstoffrest mit 1 bis 18 Kohlenstoffatom(en) je Rest,
$R^1$ R oder ein Chloratom und
n 3 oder 4 bedeutet,
durch Umsetzung von Organodisiloxanen (2) der allgemeinen Formel

$(R_3Si)_2O$ ,

mit Chlorsilanen (3) der allgemeinen Formel

$R_{4-n}SiCl_n$ ,

wobei R und n die oben dafür angegebene Bedeutung haben, in Gegenwart von Phosphornitridchloriden (4) als Katalysatoren, dadurch gekennzeichnet, daß Cokatalysatoren (5) zu Phosphornitridchloriden mitverwendet werden, wobei als Cokatalysatoren (5) solche ausgewählt aus der Gruppe der Amide der allgemeinen Formel

$X\text{-}C(O)\text{-}R_2$,

wobei $R^2$ gleich oder verschieden ist, ein Wasserstoffatom oder einen einwertigen, gegebenenfalls substituierten Kohlenwasserstoffrest mit 1 bis 8 Kohlenstoffatom(en) je Rest und X einen Rest der Formel $R^2_2N$- oder

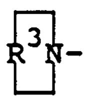

bedeutet,
wobei $R^2$ die oben dafür angegebene Bedeutung hat und
$R^3$ einen zweiwertigen Kohlenwasserstoffrest mit 5 bis 7 Kohlenstoffatomen je Rest bedeutet,
Harnstoff bzw. Harnstoffderivate der allgemeinen Formel

$X\text{-}C(O)\text{-}X$,

wobei X die oben dafür angegebene Bedeutung hat, und Cyanursäure mitverwendet werden.

**2.** Verfahren nach Anspruch 1, dadurch gekennzeichnet, daß nach Ablauf der Umsetzung die Phosphornitridchloride (4) in an sich bekannter Weise unwirksam gemacht werden.

**3.** Verfahren nach Anspruch 1 oder 2, dadurch gekennzeichnet, daß die Cokatalysatoren (5) in Mengen von 0,1 Gew.-ppm bis 1 Gew.-%, bezogen auf das Gesamtgewicht der Organosiliciumverbindungen (2) und (3), verwendet werden.

## Claims

**1.** Process for the preparation of organosiloxanes (1) of the general formula

$R^1_{4-n}Si(OSiR_3)_n$,

in which R is identical or different and denotes a hydrogen atom or a monovalent, optionally substituted hydrocarbon radical having 1 to 18 carbon atom(s) per radical,
$R^1$ denotes R or a chlorine atom, and
n is 3 or 4,
by reacting organodisiloxanes (2) of the general formula

$(R_3Si)_2O$,

with chlorosilanes (3) of the general formula

$R_{4-n}SiCl_n$,

in which R and n have the abovementioned meaning for R and n respectively,
in the presence of phosphonitrile chlorides (4) as catalysts, characterized in that cocatalysts (5) are concomitantly used, to give phosphonitrile chlorides, the cocatalysts concomitantly used being those selected from the group comprising the amides of the general formula

$X\text{-}C(O)\text{-}R^2$,

in which $R^2$ is identical or different and denotes a hydrogen atom or a monovalent, optionally substituted hydrocarbon radical having 1 to 8 carbon atom(s) per radical, and

X denotes a radical of the formula $R^2_2N$- or

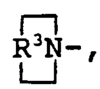

where $R^2$ has the abovementioned meaning for $R^2$, and
$R^3$ denotes a divalent hydrocarbon radical having 5 to 7 carbon atoms per radical,
urea or urea derivatives of the general formula

$X\text{-}C(O)\text{-}X$,

where X has the abovementioned meaning for X, and cyanuric acid.

**2.** Process according to Claim 1, characterized in that the phosphonitrile chlorides (4) are deactivated in a manner known per se when the reaction is complete.

**3.** Process according to Claim 1 or 2, characterized in that the cocatalysts (5) are used in amounts of 0.1 ppm by weight to 1% by

weight, relative to the total weight of the organosilicon compounds (2) and (3).

## Revendications

1. Procédé pour la préparation d'organosiloxanes (1) de formule générale :

   $R^1_{4-n}Si(OSiR_3)_n$,

   où les radicaux R, identiques ou différents, représentent un atome d'hydrogène ou un radical hydrocarboné monovalent, éventuellement substitué, avec 1 à 18 atome(s) de carbone par radical,
   $R^1$ signifie R ou un atome de chlore et
   n vaut 3 ou 4,
   par réaction d'organodisiloxanes (2) de formule générale :

   $(R_3Si)_2O$,

   avec des chlorosilanes (3) de formule générale :

   $R_{4-n}SiCl_n$,

   où R et n ont la signification donnée ci-dessus, en présence de chlorures de phosphonitrure (4) en tant que catalyseurs, caractérisé en ce qu'on utilise des cocatalyseurs (5) conjointement avec les chlorures de phosphonitrure, les co-catalyseurs (5) étant choisis dans le groupe comprenant
   les amides de formule générale

   $X-C(O)-R^2$,

   où $R^2$, identique ou différent, représente un atome d'hydrogène ou un radical hydrocarboné monovalent, éventuellement substitué, avec 1 à 8 atome(s) de carbone par radical et
   X représente un radical de formule $R^2_2N-$ ou

   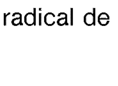

   $R^2$ ayant la signification donnée ci-dessus et
   $R^3$ étant un radical hydrocarboné bivalent avec 5 à 7 atomes de carbone par radical,
   l'urée, respectivement dérivés de l'urée, de formule générale :

   $X-C(O)-X$,

   X ayant la signification donnée ci-dessus et en utilisant conjointement de l'acide cyanurique.

2. Procédé selon la revendication 1, caractérisé en ce qu'après avoir terminé la réaction, on désactive les chlorures de phosphonitrure (4) de façon connue en soi.

3. Procédé selon la revendication 1 ou 2, caractérisé en ce qu'on utilise les co-catalyseurs (5) à raison de 0,1 ppm en poids à 1 % en poids, par rapport au poids total des composés organosiliciés (2) et (3).